# EUROPEAN PATENT SPECIFICATION

(11) **EP 3 819 503 B1**
(45) Date of publication and mention of the grant of the patent: **30.04.2025**
(21) Application number: 19830931.2
(22) Date of filing: 05.07.2019
(51) Int. Cl.: F04D 15/02, F04D 15/00, H02P 27/06, D06F 39/08, D06F 37/30

(54) **CIRCULATING PUMP DRIVING DEVICE AND LAUNDRY PROCESSING APPARATUS**
ANTRIEBSVORRICHTUNG EINER UMWÄLZPUMPE UND WÄSCHEVERARBEITUNGSVORRICHTUNG
DISPOSITIF D'ENTRAÎNEMENT DE POMPE DE CIRCULATION ET APPAREIL DE TRAITEMENT DE LINGE

(30) Priority: 06.07.2018 KR 20180079054
(43) Date of publication of application: 12.05.2021
(73) Proprietor: LG Electronics Inc., Seoul 07336 (KR)
(72) Inventor: KIM, Junsung, Seoul 08592 (KR); KIM, Jihoon, Seoul 08592 (KR); LEE, Junho, Seoul 08592 (KR)
(74) Representative: Ter Meer Steinmeister & Partner
(86) International application number: PCT/KR2019/008278
(87) International publication number: WO 2020/009521

(56) References cited:
- EP-A1- 2 113 600
- EP-A1- 3 291 439
- WO-A2-2018/124786
- DE-B3- 102017 201 008
- JP-A- 2005 013 577
- JP-A- 2009 006 081
- JP-A- 2010 046 125
- KR-A- 20160 044 901
- KR-A- 20180 072 336

## Description

### BACKGROUND OF THE invention

### 1. Field of the invention

The present invention relates to a circulation pump driving apparatus and a laundry treatment machine, and more particularly, to a circulation pump driving apparatus capable of increasing washing power by circulation pumping during washing and a laundry treatment machine including the same.

Further, the present disclosure relates to a circulation pump driving apparatus capable of driving a circulation pump motor in a sensorless manner and a laundry treatment machine including the same.

Further, the present disclosure relates to a circulation pump driving apparatus capable of improving the stability of a converter and a laundry treatment machine including the same.

### 2. Description of the Related Art

A circulation pump driving apparatus drives a circulation pump motor to pump water introduced into a water introduction part and discharge it into a washing tub.

When using an AC pump motor to drive a circulation pump, the motor is normally driven by a constant speed operation with an input AC voltage.

For example, when a frequency of the input AC voltage is 50 Hz, the circulation pump motor rotates at 3000 rpm, and when the frequency of the input AC voltage is 60 Hz, the circulation pump motor rotates at 3600 rpm.

Such an AC pump motor has a drawback such as an extended period of time for completion of drainage because the speed of the motor is not controlled during drainage.

In order to address the drawback, researches are being conducted to apply a DC brushless motor as the circulation pump motor.

Examples of a drain pump motor based on a DC brushless motor are disclosed in Japanese Patent Application Laid-Open Nos. 2001-276485 and 2002-166090.

In the prior documents, there is a drawback such as an extended period of time for completion of drainage during drainage because speed control is performed when the drain pump motor is controlled.

In addition, the prior documents disclose control of the drain pump motor, not control of the circulation pump motor, and disclose only control when the drain pump motor is controlled, not various operations of the circulation pump motor.

WO 2018/124786 A2 relates to a washing machine having a nozzle for discharging water circulated along a circulation pipe discharged from a tub into a drum.

### SUMMARY

The present invention provides a circulation pump driving apparatus capable of improving washing power by circulation pumping during washing and a laundry treatment machine including the same.

Further, the present invention provides a circulation pump driving apparatus capable of driving a circulation pump motor in a sensorless manner and a laundry treatment machine including the same.

Further, the present invention provides a circulation pump driving apparatus capable of improving the stability of a converter and a laundry treatment machine including the same.

An embodiment of the present invention provides a circulation pump driving apparatus and a laundry treatment machine including an inverter converting a DC voltage from a converter into an alternating current (AC) voltage by a switching operation and outputting converted AC voltage to a circulation pump motor, and a controller to control the circulation pump motor to operate in at least two modes among a first mode in which one of a speed and a power of the circulation pump motor is constant, a second mode in which the one of the speed and the power of the circulation pump motor repeatedly rises and falls, and a third mode in which the one of the speed and the power of the circulation pump motor rises at a first rising slope and a second rising slope and then remains constant. Further, in the second mode, the controller is configured to increase the speed of the circulation pump motor at a third rising slope, to then increase the speed of the circulation pump motor at a fourth rising slope, to then decrease the speed of the circulation pump motor at a first falling slope, and to then repeatedly rise and fall twice at the fourth rising slope and fall at the first falling slope, respectively, and to then decrease the speed of the circulation pump motor at a second falling slope, and wherein the third rising slope is larger than the fourth rising slope.

In the circulation pump driving apparatus or the laundry treatment machine according to an embodiment of the present invention, the controller may perform control such that the fourth rising slope of the circulation pump motor and the falling slope thereof are the same as each other in the second mode.

In the circulation pump driving apparatus or the laundry treatment machine according to an embodiment of the present invention, the controller may perform control such that the fourth rising slope of the circulation pump motor in the second mode and the second rising slope thereof in the third mode are the same as each other.

In the circulation pump driving apparatus or the laundry treatment machine according to an embodiment of the present invention, the controller sets the first rising slope in the third mode to be greater than the second rising slope.

In the circulation pump driving apparatus or the laundry treatment machine according to an embodiment of the present invention, the controller may perform control such that the first to third modes are performed sequentially and repeatedly.

### ADVANTAGEOUS EFFECTS

A circulation pump driving apparatus and a laundry treatment machine according to an embodiment of the present disclosure includes an inverter converting the DC voltage from the converter into an alternating current (AC) voltage by a switching operation and to output the converted AC voltage to the circulation pump motor, and a controller to control the circulation pump motor to operate in at least two modes among a first mode in which a speed of the circulation pump motor is constant, a second mode in which the speed of the circulation pump motor repeatedly rises and falls, and a third mode in which the speed of the circulation pump motor rises at a first rising slope and a second rising slope and then remains constant. Accordingly, it is possible to improve washing power due to circulation pumping during washing.

In the circulation pump driving apparatus or the laundry treatment machine according to an embodiment of the present disclosure, in the second mode, the controller may perform control such that a speed rising slope of the circulation pump motor and a speed falling slope thereof are the same as each other. Accordingly, it is possible to improve washing power due to circulation pumping during washing.

In the circulation pump driving apparatus or the laundry treatment machine according to an embodiment of the present disclosure, the controller may perform control such that a speed rising slope of the circulation pump motor in the second mode and a speed rising slope in the third mode are the same as each other. Accordingly, it is possible to improve washing power due to circulation pumping during washing.

In the circulation pump driving apparatus or the laundry treatment machine according to an embodiment of the present disclosure, the controller may set the first rising slope in the third mode to be greater than the second rising slope. Accordingly, it is possible to improve washing power due to circulation pumping during washing.

In the circulation pump driving apparatus or the laundry treatment machine according to an embodiment of the present disclosure, the controller may perform control such that the first to third modes are performed sequentially and repeatedly. Accordingly, it is possible to improve washing power due to circulation pumping during washing.

Furthermore, another embodiment of the present disclosure provides a circulation pump driving apparatus and a laundry treatment machine including an inverter converting a DC voltage from a converter into an alternating current (AC) voltage by a switching operation and outputting the converted AC voltage to a circulation pump motor, and a controller to control the circulation pump motor to operate in at least two modes among a first mode in which power of the circulation pump motor is constant, a second mode in which the power of the circulation pump motor repeatedly rises and falls, and a third mode in which the power of the circulation pump motor rises at a first rising slope and a second rising slope and then remains constant. Accordingly, it is possible to improve washing power due to circulation pumping during washing.

Furthermore, yet another embodiment of the present disclosure provides a laundry treatment machine including an inverter converting a DC voltage from a converter into an alternating current (AC) voltage by a switching operation and outputting the converted AC voltage to a circulation pump motor, and a controller to control speed of the circulation pump motor to be constant when the washing tub motor operates at a speed at which laundry is attached to the washing tub. Accordingly, it is possible to improve washing power due to circulation pumping during washing.

Furthermore, yet another embodiment of the present disclosure provides a laundry treatment machine including an inverter converting a DC voltage from a converter into an alternating current (AC) voltage by a switching operation and outputting the converted AC voltage to a circulation pump motor, and a controller to control speed of the circulation pump motor to repeatedly rise and fall when a washing tub motor operates at a speed at which laundry moves in a lower portion of the washing tub. Accordingly, it is possible to improve washing power due to circulation pumping during washing.

Furthermore, yet another embodiment of the present disclosure provides a laundry treatment machine including an inverter converting a DC voltage from a converter into an alternating current (AC) voltage by a switching operation and outputting the converted AC voltage to a circulation pump motor, and a controller to control speed of the circulation pump motor to rise at a first rising slope and a second rising slope and then remain constant when a washing tub motor operates at a speed at which laundry moves from a lower portion of the washing tub to a upper portion and falls from the upper portion. Accordingly, it is possible to improve washing power due to circulation pumping during washing.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a perspective view illustrating a laundry treatment machine according to an embodiment of the present disclosure;
FIG. 2 is a side cross-sectional view of the laundry treatment machine of FIG. 1;
FIG. 3 is an internal block diagram of the laundry treatment machine of FIG. 1;
FIG. 4 illustrates an example of an internal block diagram of a circulation pump driving apparatus of FIG. 1;
FIG. 5 illustrates an example of an internal circuit diagram of the circulation pump driving apparatus of FIG. 4.
FIG. 6 is an internal block diagram of the main controller of FIG. 5;
FIG. 7 is a view showing a power supplied to the motor when the power control or the speed control is performed;
FIGS. 8 and 9 are views illustrating the outer appearance of a circulation pump driving apparatus according to an embodiment of the present disclosure;
FIG. 10 is a view referred to in the description of the operation of a circulation pump motor;
FIG. 11 is a flowchart illustrating an operation method for a laundry treatment machine according to an embodiment of the present disclosure; and
FIGS. 12 to 15C are views referred to in the description of the operation of FIG. 11.

### DETAILED DESCRIPTION OF THE PREFERRED EMBODIMENTS

Reference will now be made in detail to the preferred embodiments of the present disclosure, examples of which are illustrated in the accompanying drawings. Wherever possible, the same reference numbers will be used throughout the drawings to refer to the same or like parts.

As used herein, the suffixes "module" and "unit" are added or used interchangeably to facilitate preparation of this specification and are not intended to suggest distinct meanings or functions. Accordingly, the terms "module" and "unit" may be used interchangeably.

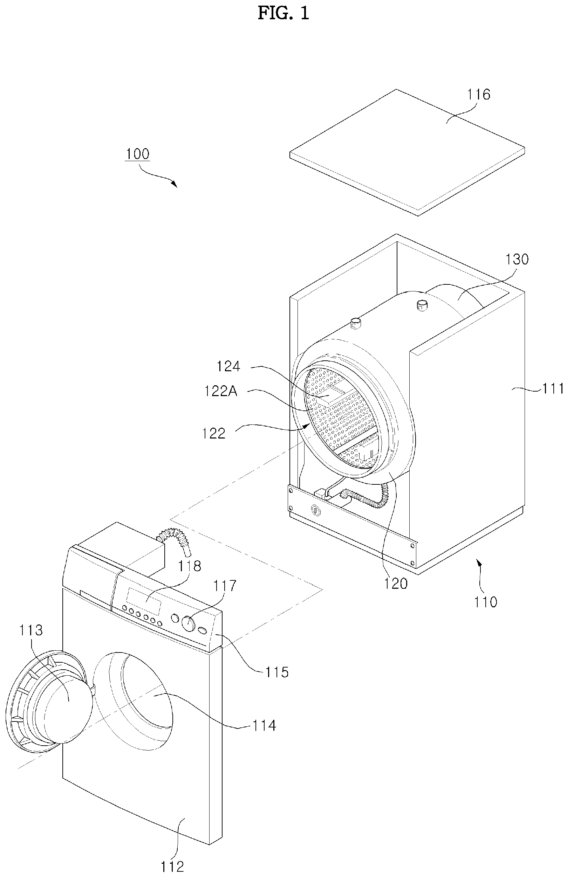

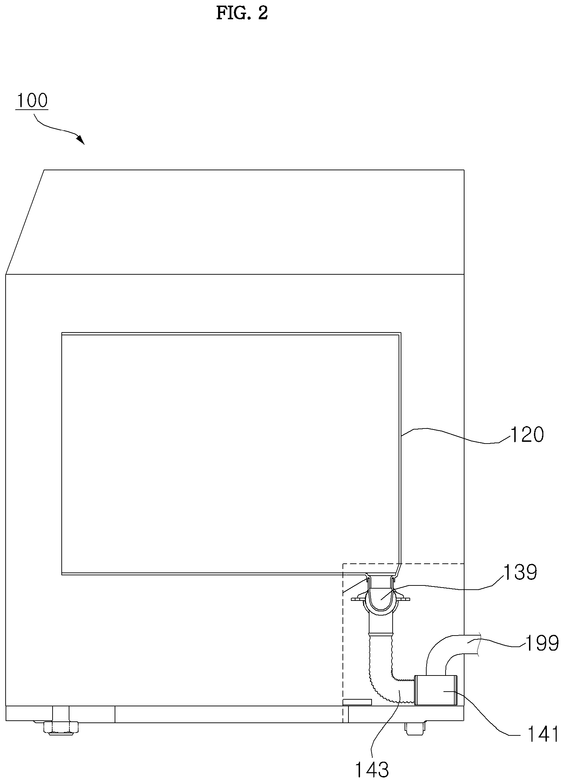

FIG. 1 is a perspective view illustrating a laundry treatment machine according to an embodiment of the present disclosure, and FIG. 2 is a side cross-sectional view illustrating the laundry treatment machine of FIG. 1.

Referring to FIGS. 1 and 2, the laundry treatment machine 100 according to an embodiment of the present disclosure is a laundry treatment machine in a front loading type in which laundry is inserted into a washing tub through the front of the machine.

Referring to the figures, the laundry treatment machine 100 is a drum-type laundry treatment machine, and includes a casing 110 forming an outer appearance of the laundry treatment machine 100, a washing tub 120 disposed inside the casing 110 and supported by the casing 110, a drum 122 that is a washing tub disposed inside the washing tub 120 to wash laundry, a motor 130 for driving the drum 122, a wash water supply apparatus (not shown) disposed outside a cabinet body 111 to supply wash water into the casing 110, and a drainage apparatus (not shown) formed under the washing tub 120 to discharge the wash water to the outside.

A plurality of through holes 122A are formed in the drum 122 to allow the wash water to pass therethrough, and a lifter 124 may be disposed on an inner surface of the drum 12 such that laundry is lifted to a predetermined height and then falls by gravity when the drum 122 rotates.

The casing 110 includes a cabinet body 111, a cabinet cover 112 disposed on the front of the cabinet body 111 and coupled to the cabinet body 111, a control panel 115 disposed on the cabinet cover 112 and coupled to the cabinet body 111, and a top plate 116 disposed on the control panel 115 and coupled to the cabinet body 111.

The cabinet cover 112 includes a laundry entrance hole 114 formed to allow laundry to enter and exit therethrough, and a door 113 disposed in such a manner as to be rotatable in a horizontal direction to open or close the laundry entrance hole 114.

The control panel 115 includes operation keys 117 for controlling an operation state of the laundry treatment machine 100 and a display 118 (not shown) disposed on one side of the operation keys 117 to display the operation state of the laundry treatment machine 100.

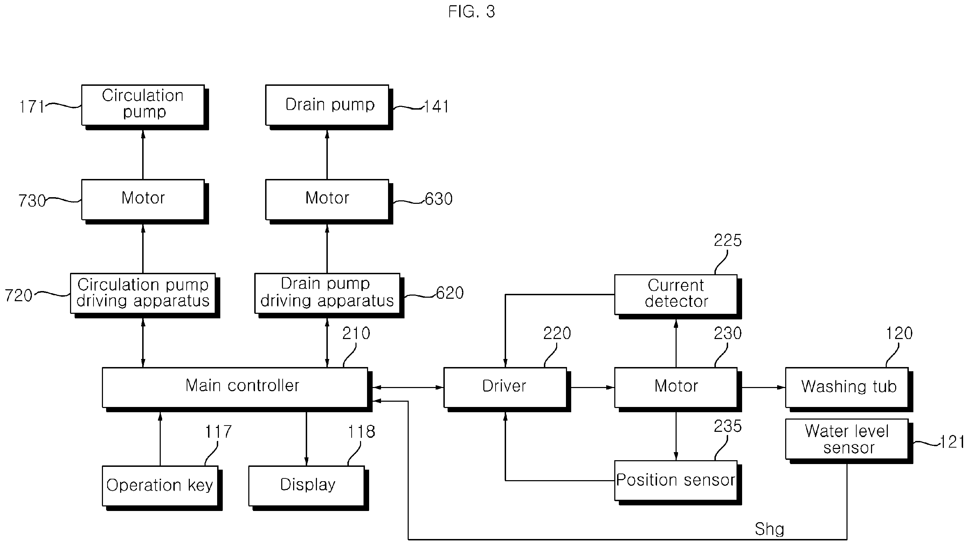

The operation keys 117 and the display 118 in the control panel 115 are electrically connected to a controller (not shown), and the controller (not shown) electrically controls each component of the laundry treatment machine 100. A description about an operation of the controller (not shown) is omitted because the operation of the controller 210 illustrated in FIG. 3 can be referred to.

Meanwhile, an automatic balancer (not shown) may be provided in the drum 122. The automatic balancer (not shown), which is provided to reduce vibrations generated based on an eccentric amount of laundry accommodated in the drum 122, may be implemented as a liquid balancer, a ball balancer, or the like.

Meanwhile, the wash water is drained from the washing tub 120 through a drain channel 143. A drain valve 139 for regulating the drain channel 143 and a drain pump 141 for pumping the wash water may be provided.

Moreover, a circulation pump 171 for pumping wash water may be provided on an end of the drain channel 143. The wash water pumped by the circulation pump 171 may be introduced into a washing tub 120 through a circulation channel 144.

FIG. 3 is an internal block diagram of the laundry treatment machine of FIG. 1.

Referring to FIG. 3, in the laundry treatment machine 100, the driving unit 220 is controlled by the main controller 210, and the driving unit 220 drives the motor 230. Thereby, the washing tub 120 is rotated by the motor 230.

Meanwhile, the laundry treatment machine 100 may include a motor 630 for driving the drain pump 141 and a drain pump driving apparatus 620 for driving the motor 630. The drain pump driving apparatus 620 may be controlled by the main controller 210.

Meanwhile, the laundry treatment machine 100 may include a circulation pump motor 730 for driving the circulation pump 171 and a circulation pump driving apparatus 720 for driving the circulation pump motor 730. The circulation pump driving apparatus 720 may be controlled by the main controller 210.

In this specification, the circulation pump driving apparatus 720 may be referred to as a circulation pump driving unit.

The main controller 210 operates by receiving an operation signal from an operation key 117. Accordingly, washing, rinsing, and dewatering processes may be performed.

In addition, the main controller 210 may control the display 118 to display a washing course, a washing time, a dewatering time, a rinsing time, a current operation state, or the like.

Meanwhile, the main controller 210 controls the driving unit 220 to operate the motor 230. For example, the main controller 210 may control the driving unit 220 to rotate the motor 230, based on a current detector 225 for detecting an output current flowing in the motor 230 and a position sensor 235 for sensing a position of the motor 230. While it is illustrated in the drawing that the detected current and the sensed position signal are input to the driving unit 220, embodiments of the present disclosure are not limited thereto. The detected current and the sensed position signal may be input to the main controller 210 or to both the main controller 210 and the driving unit 220.

The driving unit 220, which serves to drive the motor 230, may include an inverter (not shown) and an inverter controller (not shown). In addition, the driving unit 220 may further include a converter or the like for supplying a direct current (DC) voltage input to the inverter (not shown) .

For example, when the inverter controller (not shown) outputs a switching control signal in a pulse width modulation (PWM) scheme to the inverter (not shown), the inverter (not shown) may perform a high-speed switching operation to supply an alternating current (AC) voltage at a predetermined frequency to the motor 230.

The main controller 210 may sense a laundry amount based on a current io detected by the current detector 220 or a position signal H sensed by the position sensor 235. For example, while the washing tub 120 rotates, the laundry amount may be sensed based on the current value io of the motor 230.

The main controller 210 may sense an amount of eccentricity of the washing tub 120, that is, an unbalance (UB) of the washing tub 120. The sensing of the amount of eccentricity may be performed based on a ripple component of the current io detected by the current detector 225 or an amount of change in rotational speed of the washing tub 120.

Meanwhile, a water level sensor 121 may measure a water level in the washing tub 120.

For example, a water level frequency at a zero water level with no water in the washing tub 120 may be 28 KHz, and a frequency at a full water level at which water reaches an allowable water level in the washing tub 120 may be 23 KHz.

That is, the frequency of the water level detected by the water level sensor 121 may be inversely proportional to the water level in the washing tub.

The water level Shg in the washing tub output from the water level sensor 121 may be a water level frequency or a water level that is inversely proportional to the water level frequency.

Meanwhile, the main controller 210 may determine whether the washing tub 120 is at a full water level, a zero water level, or a reset water level, based on the water level Shg in the washing tub detected by the water level sensor 121.

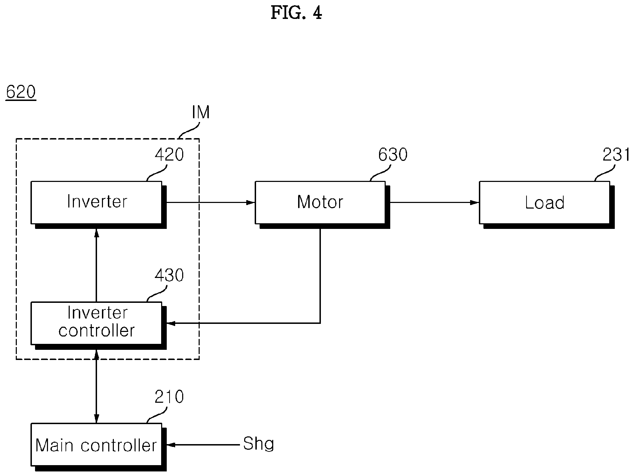

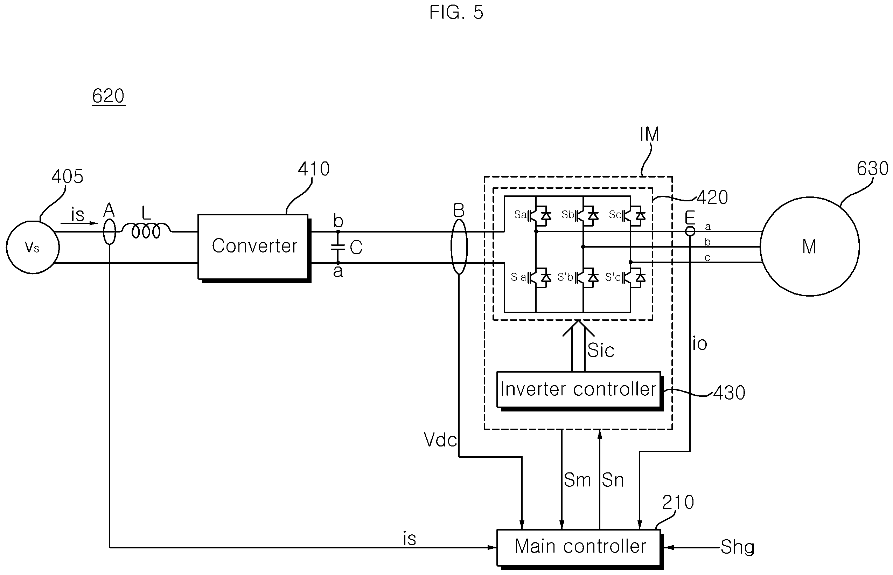

FIG. 4 illustrates an example of an internal block diagram of the circulation pump driving apparatus of FIG. 1, and FIG. 5 illustrates an example of an internal circuit diagram of the circulation pump driving apparatus of FIG. 4.

Referring to FIGS. 4 and 5, the circulation pump driving apparatus 720 according to an embodiment of the present disclosure serves to drive the circulation pump motor 730 in a sensorless manner, and may include an inverter 420, an inverter controller 430, and a main controller 210.

The main controller 210 and the inverter controller 430 may correspond to a controller and a second controller described in this specification, respectively.

The circulation pump driving apparatus 720 according to an embodiment of the present disclosure may include a converter 410, a DC terminal voltage detector B, a DC terminal capacitor C, and an output current detector E. In addition, the circulation pump driving apparatus 720 may further include an input current detector A and a reactor L.

Hereinafter, an operation of each constituent unit in the circulation pump driving apparatus 720 of FIGS. 4 and 5 will be described.

The reactor L is disposed between a commercial AC voltage source 405 (Vs) and the converter 410, and performs a power factor correction operation or a boost operation. In addition, the reactor L may also function to limit a harmonic current resulting from high-speed switching of the converter 410.

The input current detector A may detect an input current is input from the commercial AC voltage source 405. To this end, a current transformer (CT), a shunt resistor, or the like may be used as the input current detector A. The detected input current is is may be input to the inverter controller 430 or the main controller 210 as a discrete signal in the form of a pulse. In the drawing, it is illustrated that the detected output current idc is input to the main controller 210.

The converter 410 converts the commercial AC voltage source 405 having passed through the reactor L into a DC voltage and outputs the DC voltage. Although the commercial AC voltage source 405 is shown as a single-phase AC voltage source in the drawing, it may be a 3-phase AC voltage source. The converter 410 has an internal structure that varies depending on the type of commercial AC voltage source 405.

Meanwhile, the converter 410 may be configured with diodes or the like without a switching device, and may perform a rectification operation without a separate switching operation.

For example, in case of the single-phase AC voltage source, four diodes may be used in the form of a bridge. In case of the 3-phase AC voltage source, six diodes may be used in the form of a bridge.

As the converter 410, for example, a half-bridge type converter having two switching devices and four diodes connected to each other may be used. In case of the 3-phase AC voltage source, six switching devices and six diodes may be used for the converter.

When the converter 410 has a switching device, a boost operation, a power factor correction, and a DC voltage conversion may be performed by the switching operation of the switching device.

Meanwhile, the converter 410 may include a switched mode power supply (SMPS) having a switching device and a transformer.

The converter 410 may convert a level of an input DC voltage and output the converted DC voltage.

The DC terminal capacitor C smooths the input voltage and stores the smoothed voltage. In the drawing, one element is exemplified as the DC terminal capacitor C, but a plurality of elements may be provided to secure element stability.

While it is illustrated in the drawing that the DC terminal capacitor C is connected to an output terminal of the converter 410, embodiments of the present disclosure are not limited thereto. The DC voltage may be input directly to the DC terminal capacitor C.

For example, a DC voltage from a solar cell may be input directly to the DC terminal capacitor C or may be DC-to-DC converted and input to the DC terminal capacitor C. Hereinafter, what is illustrated in FIG. 5 will be mainly described.

Both ends of the DC terminal capacitor C may be referred to as DC terminals or DC link terminals because the DC voltage is stored therein.

The DC terminal voltage detector B may detect a voltage Vdc between the DC terminals, which are both ends of the DC terminal capacitor C. To this end, the DC terminal voltage detector B may include a resistance element and an amplifier. The detected DC terminal voltage Vdc may be input to the inverter controller 430 or the main controller 210 as a discrete signal in the form of a pulse. In FIG. 5, it is illustrated that the detected output current idc is input to the main controller 210.

The inverter 420 may include a plurality of inverter switching devices. The inverter 420 may convert the smoothed DC voltage Vdc into an AC voltage by an on/off operation of the switching device, and output the AC voltage to the synchronous motor 630.

For example, when the synchronous motor 630 is in a 3-phase type, the inverter 420 may convert the DC voltage Vdc into 3-phase AC voltages va, vb and vc and output the 3-phase AC voltages to the three-phase synchronous motor 630 as shown in FIG. 5.

As another example, when the synchronous motor 630 is in a single-phase type, the inverter 420 may convert the DC voltage Vdc into a single-phase AC voltage and output the single-phase AC voltage to a single-phase synchronous motor 630.

The inverter 420 includes upper switching devices Sa, Sb and Sc and lower switching devices S'a, S'b and S'c. Each of the upper switching devices Sa, Sb and Sc that are connected to one another in series and a respective one of the lower switching devices S'a, S'b and S'c that are connected to one another in series form a pair. Three pairs of upper and lower switching devices Sa and S'a, Sb and S'b, and Sc and S'c are connected to each other in parallel. Each of the switching devices Sa, S'a, Sb, S'b, Sc and S'c is connected with a diode in anti-parallel.

Each of the switching devices in the inverter 420 is turned on/off based on an inverter switching control signal Sic from the inverter controller 430. Thereby, an AC voltage having a predetermined frequency is output to the synchronous motor 630.

The inverter controller 430 may output the switching control signal Sic to the inverter 420.

In particular, the inverter controller 430 may output the switching control signal Sic to the inverter 420, based on a voltage command value Sn input from the main controller 210.

The inverter controller 430 may output voltage information Sm of the circulation pump motor 730 to the main controller 210, based on the voltage command value Sn or the switching control signal Sic.

The inverter 420 and the inverter controller 430 may be configured as one inverter module IM, as shown in FIG. 4 or 5.

The main controller 210 may control the switching operation of the inverter 420 in a sensorless manner.

To this end, the main controller 210 may receive an output current io detected by the output current detector E and a DC terminal voltage Vdc detected by the DC terminal voltage detector B.

The main controller 210 may calculate a power based on the output current io and the DC terminal voltage Vdc, and output a voltage command value Sn based on the calculated power.

In particular, the main controller 210 may perform power control to stably operate the circulation pump motor 730 and output a voltage command value Sn based on the power control. Accordingly, the inverter controller 430 may output a switching control signal Sic corresponding to the voltage command value Sn based on the power control.

The output current detector E may detect an output current io flowing in the 3-phase circulation pump motor 730.

The output current E may be disposed between the 3-phase circulation pump motor 730 and the inverter 420 to detect an output current io flowing in the motor. In the drawing, it is illustrated that the a-phase current is detected, out of the phase current ia, ib, and ic which is the output current io flowing in the circulation pump motor 730.

Meanwhile, as opposed to the drawing, the output current detector E may be disposed between the DC terminal capacitor C and the inverter 420 and sequentially detect the output current flowing in the motor. In this case, one shunt resistance element Rs may be used, and the phase current ia, ib, and ic flowing in the circulation pump motor 730 may be detected in a time-division manner.

The detected output current io may be input to the inverter controller 430 or the main controller 210 as a discrete signal in the form of a pulse. In the drawing, it is illustrated that the detected output current io is input to the main controller 210.

The 3-phase circulation pump motor 730 includes a stator and a rotor. The rotor rotates when the AC voltage at a predetermined frequency for each phase is applied to a coil of the stator for each phase (phase a, b or c).

Such a circulation pump motor 730 may include a brushless DC (BLDC) motor.

The circulation pump motor 730 may include, for example, a surface-mounted permanent-magnet synchronous motor (SMPMSM), an interior permanent magnet synchronous motor (IPMSM), and a synchronous reluctance motor (SynRM). The SMPMSM and the IPMSM are permanent magnet synchronous motors (PMSM) employing permanent magnets, while the SynRM has no permanent magnet.

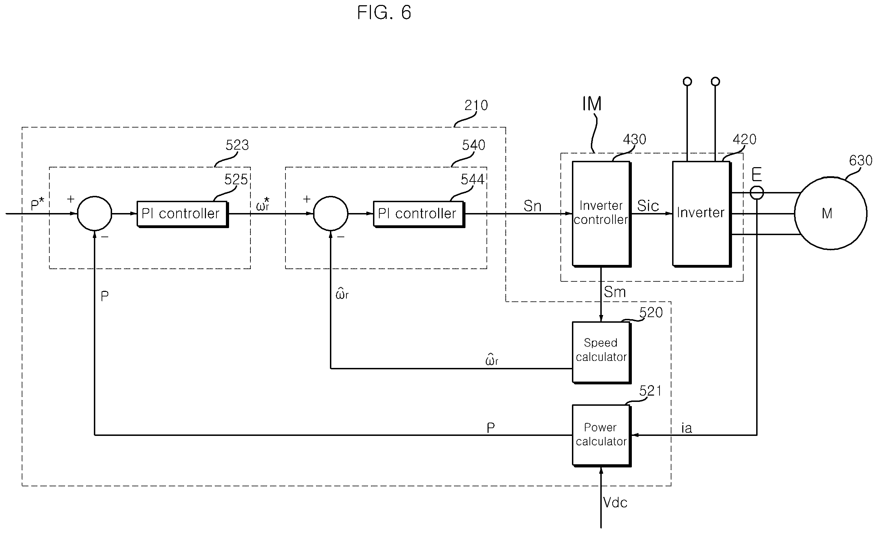

FIG. 6 is an internal block diagram of the main controller of FIG. 5.

Referring to FIG. 6, the main controller 210 may include a speed calculator 520, a power calculator 521, a power controller 523, and a speed controller 540.

The speed calculator 520 may calculate a speed of the circulation pump motor 730, based on the voltage information Sm of the circulation pump motor 730 received from the inverter controller 430.

Specifically, the speed calculator 520 may calculate a zero crossing for the voltage information Sm of the circulation pump motor 730 received from the inverter controller 430, and calculate a speed of the circulation pump motor 730 based on the zero crossing.

The power calculator 521 may calculate a power P supplied to the circulation pump motor 730, based on the output current idc detected by the output current detector E and the DC terminal voltage Vdc detected by the DC terminal voltage detector B.

The power controller 523 may generate a speed command value ω*r based on the power P calculated by the power calculator 521 and a preset power command value P*r.

For example, the power controller 523 may generate the speed command value ω*r, while a PI controller 525 performs PI control, based on a difference between the calculated power P and the power command value P*r.

Meanwhile, the speed controller 540 may generate a voltage command value Sn, based on the speed calculated by the speed calculator 5200 and the speed command value ω*r generated by the power controller 523.

Specifically, the speed controller 540 may generate the voltage command value Sn, while a PI controller 544 performs PI control, based on a difference between the calculated speed and the speed command value ω*r.

The generated voltage command value Sn may be output to the inverter controller 430.

The inverter controller 430 may receive the voltage command value Sn from the main controller 210, and generate and output an inverter switching control signal Sic in the PWM scheme.

The output inverter switching control signal Sic may be converted into a gate drive signal in a gate driving unit (not shown), and the converted gate drive signal may be input to a gate of each switching device in the inverter 420. Thus, each of the switching devices Sa, S'a, Sb, S'b, Sc and S'c in the inverter 420 performs a switching operation. Accordingly, the power control can be performed stably.

Meanwhile, the main controller 210 according to an embodiment of the present disclosure may control the power supplied to the circulation pump motor 730, during circulation pumping, to be constant, without decreasing over time. Accordingly, a drainage time can be shortened.

The main controller 210 according to an embodiment of the present disclosure may control the circulation pump motor 730 such that the power control is performed when the drainage is started and the power control is terminated when a residual water level is reached. Accordingly, the drainage operation can be efficiently performed.

The main controller 210 according to an embodiment of the present disclosure may control the voltage command value Sn and a duty of the switching control signal Sic to be greater as the output current io is at a smaller level. Accordingly, the circulation pump motor 730 can be driven with a constant power.

The circulation pump motor 730 according to an embodiment of the present disclosure may be implemented as a brushless DC motor 630. Accordingly, the power control, rather than constant-speed control, can be implemented in a simple manner.

Meanwhile, during the circulation pumping, the main controller 210 according to an embodiment of the present disclosure may control the speed of the circulation pump motor 730 to be increased when the power supplied to the circulation pump motor 730 does not reach the first power, and control the speed of the circulation pump motor 730 to be decreased when the power supplied to the circulation pump motor 730 exceeds the first power.

The main controller 210 according to still an embodiment of the present disclosure may control the speed of the circulation pump motor 730 to be constant, when the power supplied to the circulation pump motor 730 reaches the first power.

Since the power control allows for driving at constant power as described above, the converter 410 supplies constant power, thereby improving the stability of the converter 410. In addition, since the power control is performed, it is possible to minimize a decrease in drainage performance according to installation conditions.

Moreover, the circulation pump motor 730 may be driven stably, and, therefore, the drainage time may be reduced.

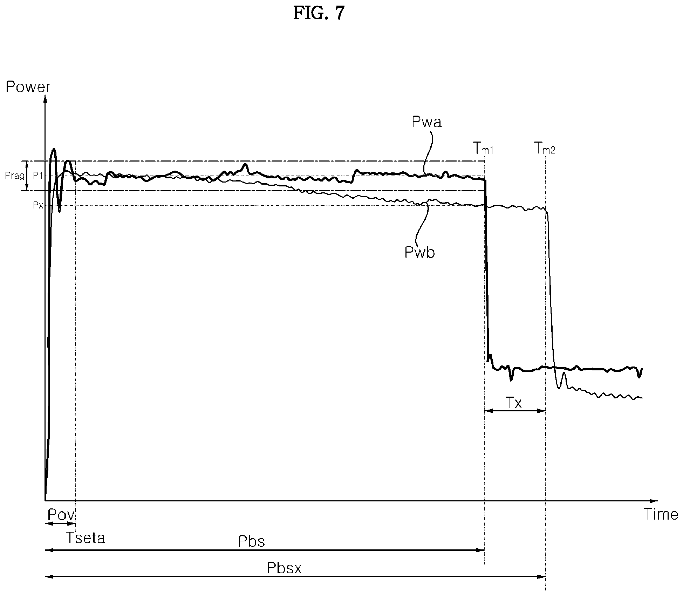

FIG. 7 is a view showing a power supplied to the motor when the power control or the speed control is performed.

First, when the power control is performed as in the embodiments of the present disclosure, a time-dependent waveform of the power supplied to the circulation pump motor 730 may be exemplified as Pwa.

FIG. 7 illustrates that the power is maintained in a substantially constant manner until time point Tm1 by performing the power control, and the power control is terminated at time point Tm1.

By performing the power control, the main controller 210 may control the power supplied to the circulation pump motor 730, during the circulation pumping, to be constant without decreasing over time, although the water level in the washing tub 120 is lowered.

By performing the power control, the main controller 210 may control the power supplied to the circulation pump motor 730, during the circulation pumping, to be the first power P1.

In particular, even if the lift is changed, the main controller 210 may control the power supplied to the circulation pump motor 730, during the circulation pumping, to be the constant first power P1, by performing the power control.

At this time, the constant first power P1 may mean that the circulation pump motor 730 is driven with a power within a first allowable range Prag based on the first power P1. For example, the power within the first allowable range Prag may be a power pulsating within about 10% on the basis of the first power P1.

In FIG. 7, it is illustrated that when the power control is performed, the circulation pump motor 730 is driven with a power within the first allowable range Prag on the basis of the first power P1 from time point Tseta until completion time point Tm1, excluding an overshooting period Pov. Accordingly, water pumping can be performed smoothly even if the lift is changed during the circulation pumping. In addition, the stability of the converter 410 can be improved.

Here, the first allowable range Prag may be greater as the first power P1 is at a higher level. In addition, the first allowable range Prag may be greater as a completion period Pbs is longer.

To this end, when the power control is performed during the circulation pumping, the main controller 210 may calculate a power based on the output current io and the DC terminal voltage Vdc and output a voltage command value Sn based on the calculated power, and the inverter controller 430 may output a switching control signal Sic to the circulation pump motor 730 based on the voltage command value Sn.

Meanwhile, the main controller 210 may control the voltage command value Sn and a duty of the switching control signal Sic to be greater as the output current io is at a smaller level. Accordingly, the circulation pump motor 730 can be driven with a constant power.

Meanwhile, the main controller 210 may control the power supplied to the circulation pump motor 730 to increase abruptly during a period PoV to perform power control.

Meanwhile, the main controller 210 may control the power supplied to the circulation pump motor 730 to decrease abruptly from the time point Tm1.

Unlike the embodiments of the present disclosure, when the speed control is performed, that is, when the speed of the circulation pump motor 730 is controlled to be maintained constantly, a time-dependent waveform of the power supplied to the circulation pump motor 730 may be exemplified as Pwb.

In FIG. 7, it is illustrated that the speed control is performed until time point Tm2, and the speed control is terminated at time point Tm2.

The waveform Pwb of the power based on the speed control indicates that, as the water level in the washing tub is lowered during the circulation pumping, the power supplied to the circulation pump motor 730 may be gradually reduced while the speed of the circulation pump motor 730 is constant.

In FIG. 7, it is illustrated that, during a speed control period Pbsx, the power supplied to the circulation pump motor 730 is gradually reduced up to approximately Px at the completion time point Tm2.

Accordingly, the time point when the operation of the circulation pump motor 730 is terminated at the time of performing speed control is Tm2, which is delayed by approximately period Tx, compared to that at the time of performing power control.

Consequently, according to the embodiments of the present disclosure, since the power control is performed during the circulation pumping, the drainage time can be shortened by approximately period Tx, compared to that at the time of performing speed control. In addition, the power supplied from the converter 410 can be kept constant, thereby improving the operation stability of the converter 410.

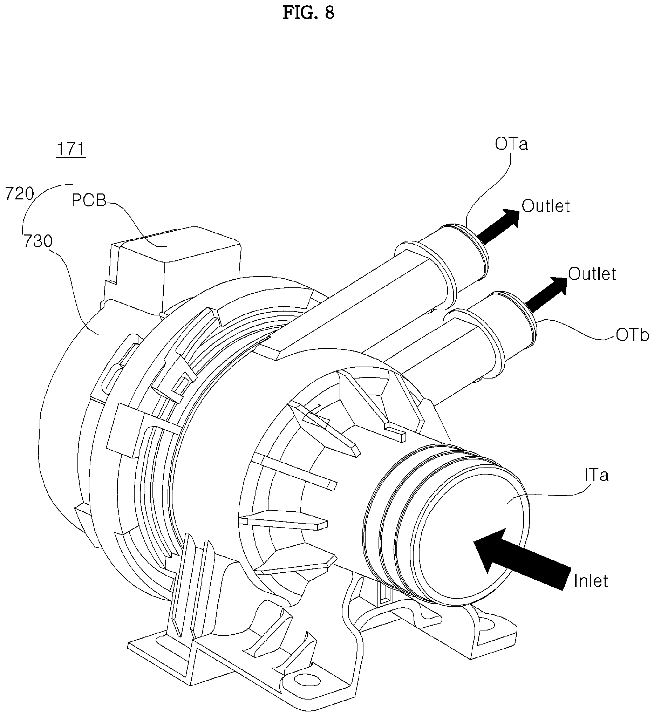

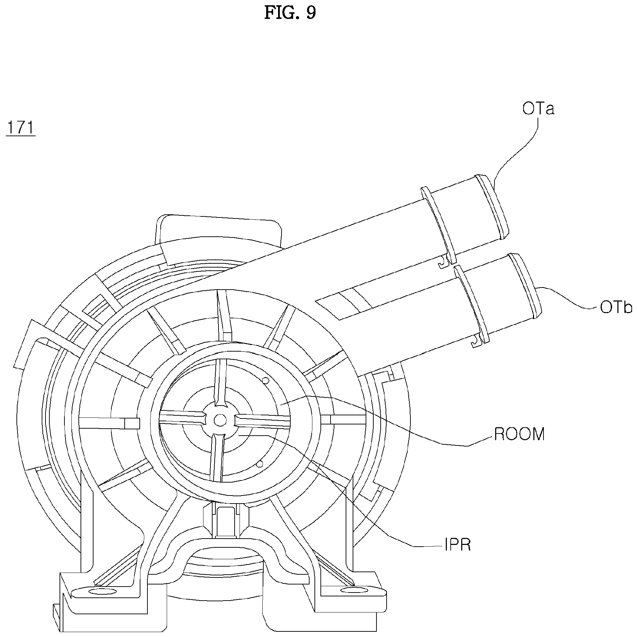

FIGS. 8 and 9 are views illustrating the outer appearance of a circulation pump driving apparatus according to an embodiment of the present disclosure.

Referring to FIGS. 8 and 9, wash water is drained through the drain channel 143 connected to the washing tub 120, and the drain channel 143 is connected to a water introduction part ITa of the circulation pump 171.

The water introduction part ITa is formed of a hollow tube, and a vortex chamber ROOM with a larger diameter than that of the water introduction part ITa is formed within the water introduction part ITa.

An impeller IPR which rotates by the torque of the circulation pump motor 730 is disposed in the vortex chamber ROOM.

Meanwhile, the circulation pump motor 730 and a circuit board PCB for applying an electrical signal to the circulation pump motor 730 may be disposed on the opposite side of the water introduction part ITa relative to the impeller IPR. The above-described circulation pump driving apparatus 720 may be mounted on the circuit board PCB.

Meanwhile, two water discharge parts OTa and OTb for discharging water may be disposed on one side of the vortex chamber ROOM, in a direction intersecting the water introduction part ITa. In this case, the water discharge parts OTa and OTb may be connected to the circulation channel 144.

In this way, the wash water pumped by the circulation pump 171 may be introduced into the washing tub 120 through the circulation channel 144.

Meanwhile, the water discharge parts OTa and OTb may be formed in a direction normal to the vortex chamber ROOM, for smooth drainage. Such a structure of the circulation pump 171 may be called a volute-type drain pump structure.

In the case of such a volute-type drain pump structure, the water discharge parts OTa and OTb are formed on one side of the vortex chamber ROOM. Thus, it is desirable that the circulation pump motor 730 rotates clockwise CCW relative to FIG. 9.

Meanwhile, as described above, since the drain pipe 199 is positioned higher than the circulation pump 171, the water discharge parts OTa and OTb may be sloped in the direction of the drain pipe 199.

Similarly, the water introduction part ITa also may be sloped, and the angle of slope of the water introduction part ITa to the ground may be smaller than the angle of slope of the water discharge parts OTa ans OTb to the ground. Therefore, water is introduced more smoothly into the water introduction part ITa, and the water in the vortex chamber ROOM is discharged through the water discharge parts OTa and OTb by means or the impeller IPR which rotates by the torque of the circulation pump motor 730.

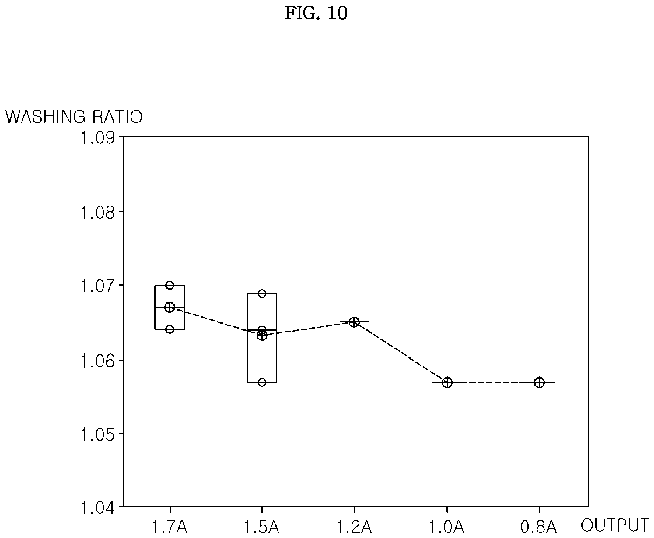

FIG. 10 is a view referred to in the description of the operation of a circulation pump motor.

Referring to FIG. 10, the horizontal axis represents the level of the output current flowing through the circulation pump motor, and the vertical axis represents the washing ratio for laundry in the washing tub 120.

The washing ratio is a numerical value of laundry information for laundry, and the higher the number, the higher the washing power.

Referring to FIG. 10, it can be seen that the level of the output current on the horizontal axis increases from right to left, and accordingly, the washing ratio increases.

Therefore, in the present disclosure, a method for increasing the power applied to the circulation pump motor 730 is devised such that that washing power by circulation pumping during washing may be improved.

A method capable of improving the washing power by circulation pumping during washing while using efficient power consumption is devised.

To this end, in the present disclosure, a method of operating the circulation pump motor 730 with the motion of the washing tub 120 is devised.

For example, the circulation pump motor 730 operates at a constant speed when rotating with laundry attached to the washing tub 120, and thus it is possible to spray the wash water through spray ports OPa to OPd formed in the washing tub 120, thereby making it possible to improve the washing power.

For another example, the speed of the circulation pump motor 730 repeatedly rises and falls when a washing tub motor 230 is operated at a speed at which laundry moves in a lower portion of the washing tub 120, and thus it is possible to spray wash water through the spray ports OPa to OPd formed in the washing tub 120, thereby making it possible to improve the washing power.

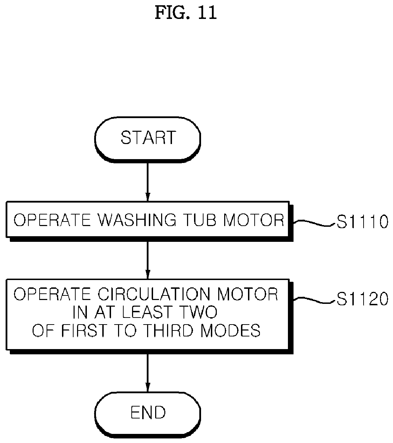

For another example, the speed of the circulation pump motor 730 rises at a first rising slope and a second rising slope and then remains constant when the washing tub motor 230 is operated at a speed at which the laundry moves from the lower portion of the washing tub 120 to the upper portion and falls from the top, and thus it is possible to spray wash water through the spray ports OPa to OPd formed in the washing tub 120, thereby making it possible to improve the washing power. This will be described with reference to FIG. 11 and subsequent drawings.

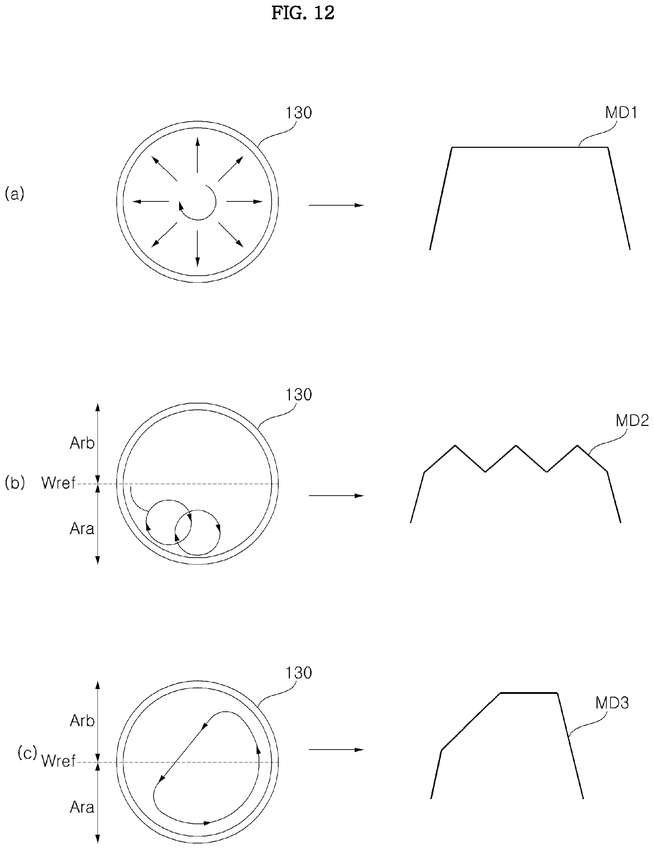

FIG. 11 is a flowchart illustrating an operation method for a laundry treatment machine according to an embodiment of the present disclosure, and FIGS. 12 to 15C illustrate the operation method of FIG. 11.

Referring to the drawings, a main controller 210 controls the washing tub motor 230 to be driven (S1110).

During washing, the washing tub motor 230 may operate at a speed at which laundry is attached to the washing tub 120, operate at a speed at which the laundry moves in the lower portion of the washing tub 120, or operate at a speed at which the laundry moves from the lower portion of the washing tub 120 to the upper portion and falls from the upper portion.

Next, the main controller 210 may control the circulation pump motor 730 to be operated in at least two of the first mode to the third mode in response to the operation of the washing tub motor 230. (S1120). Accordingly, it is possible to improve washing power due to circulation pumping during washing.

Here, the first mode MD1 may represent a mode in which the speed of the circulation pump motor 730 is constant, the second mode MD2 may represent a mode in which the speed of the circulation pump motor 730 repeatedly rises and falls, and the third mode MD3 may represent a mode in which the speed of the circulation pump motor 730 rises at the first rising slope and the second rising slope and then remains constant.

Meanwhile, according to another embodiment of the present disclosure, the main controller 210 may control the circulation pump motor 730 to be operated in at least two or three modes among the first mode MD1 in which power of the circulation pump motor 730 is constant, the second mode MD2 in which the power of the circulation pump motor 730 repeatedly risies and falls, and the third mode MD3 in which the power of the circulation pump motor 730 rises at the first rising slope and the second rising slope and then remains constant. Accordingly, it is possible to improve washing power due to circulation pumping during washing.

(a) of FIG. 12 illustrates that the washing tub motor 230 operates at a speed at which laundry is attached to the washing tub 120. Accordingly, the main controller 210 may control the speed of the circulation pump motor 730 to be constant.

Meanwhile, (b) of FIG. 12 illustrates that the washing tub motor 230 operates at a speed at which laundry moves in the lower portion of the washing tub 120. In particular, it is illustrated that the washing tub motor 230 operates at a speed at which the laundry moves in a lower portion Ara based on an imaginary line Wref, when the washing tub 120 is cylindrical.

Accordingly, the main controller 210 may perform control such that the speed of the circulation pump motor 730 repeatedly rises and falls.

(c) of FIG. 12 illustrates that the washing tub motor 230 operates at a speed at which laundry is attached to the washing tub 120. In particular, it is illustrated that the washing tub motor 230 operates at a speed at which the laundry moves from a lower portion Ara of the washing tub 120 to an upper portion Arb thereof and falls from the upper portion Arb based on an imaginary line Wref, when the washing tub 120 is cylindrical.

Accordingly, the main controller 210 may perform control such that the speed of the circulation pump motor 730 rises at the first rising slope and second rising slope and then remains constant.

As illustrated in FIGS. (a) to (c) of 12, in the main controller 210 is, the first mode MD1 of (a) of FIG. 12, the second mode MD2 of (b) of FIG. 12, and the third mode MD3 of (c) of FIG. 12 are performed sequentially, and may be controlled to be repeatedly performed. Accordingly, it is possible to improve washing power due to circulation pumping during washing.

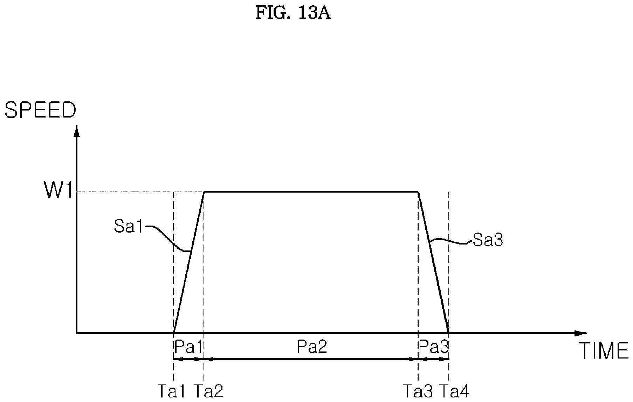

FIG. 13A is a diagram illustrating the first mode MD1 of (a) of FIG. 12 in detail.

Referring to the drawing, in the first mode MD1, in order to rotate with the circulation pump motor 730 at a constant speed, the main controller 210 may increase the speed of the circulation pump motor 730 at a rising slope Sa1 and decrease the speed of the circulation pump motor 730 at a falling slope Sa3.

In this case, the rising slope and the falling slope may differ only in polarity, and have the same magnitude.

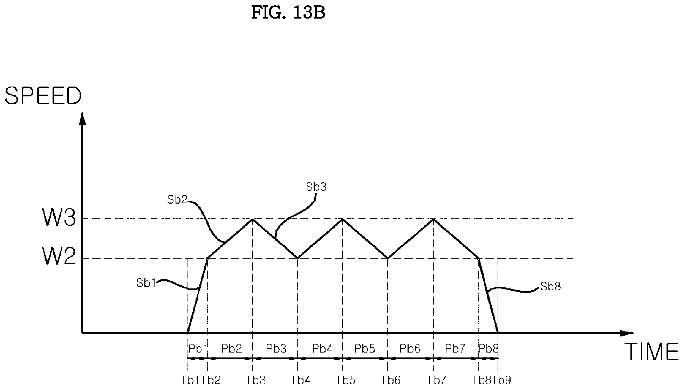

FIG. 13B is a diagram illustrating the second mode MD2 of (b) of FIG. 12 in detail.

Referring to FIG. 13B, in the second mode MD2, for the speed of the circulation pump motor 730 to repeatedly rise and fall, the main controller 210 may increase the speed of the circulation pump motor 730 at a rising slope Sb1, increase the speed of the circulation pump motor 730 at a rising slope Sb2, and decrease the speed of the circulation pump motor 730 at a falling slope Sb3, and then may further repeatedly rise and fall twice at the rising slope Sb2 and the falling slope Sb3 and decrease the speed of the circulation pump motor 730 at a falling slope Sb8.

In this case, it is desirable that the rising slope Sb1 is larger than the rising slope Sb2. Accordingly, it is possible to quickly increase the speed of the circulation pump motor 730.

Meanwhile, the rising slope Sb2 and the falling slope Sb3 may differ only in polarity and may have the same magnitude.

In addition, the rising slope Sb1 and the falling slope Sb8 may differ only in polarity and may have the same magnitude.

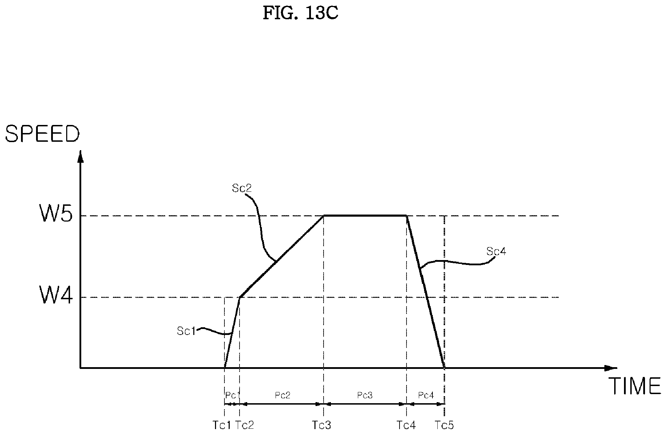

FIG. 13C is a diagram illustrating the third mode MD2 of (c) of FIG. 12 in detail.

Referring to FIG. 13C, in the third mode MD3, for the speed of the circulation pump motor 730 to repeatedly rise and fall, the main controller 210 may increase the speed of the circulation pump motor 730 at a rising slope Sc1, increase the speed of the circulation pump motor 730 at a rising slope Sc2, and rotate at a constant speed, and then decrease the speed of the circulation pump motor 730 at a falling slope Sc4.

In this case, it is desirable that the rising slope Sc1 is larger than the rising slope Sc2. Accordingly, it is possible to quickly increase the speed of the circulation pump motor 730.

Meanwhile, the rising slope Sc2 of FIG. 13C may be the same as the rising slope Sb2 of FIG. 13B.

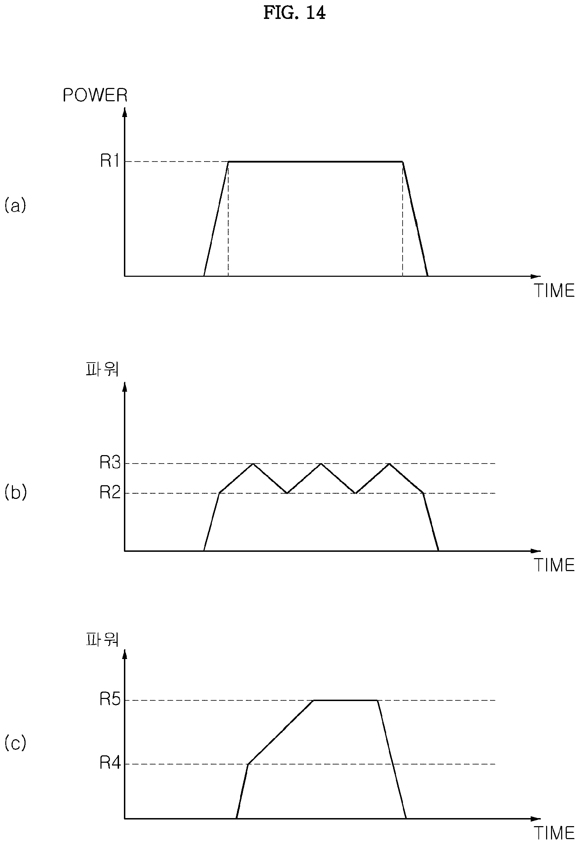

FIG. 14 illustrates that the first mode to the third mode are performed based on power.

Referring to FIG. 14, the main controller 210 may control the circulation pump motor 730 to be operated in at least two or three modes among the first mode MD1 in which power of the circulation pump motor 730 is constant, as illustrated in (a) of FIG. 14, the second mode MD2 in which the power of the circulation pump motor 730 repeatedly rises and falls, as illustrated in (b) of FIG. 14, and the third mode MD3 in which the power of the circulation pump motor 730 rises at the first rising slope and the second rising slope and then remains constant, as illustrated in (c) of FIG. 14.

As described above, the first mode of (a) of FIG. 14 may be performed when the washing tub motor 230 operates at a speed at which laundry is attached to the washing tub 120, the second mode of (b) of FIG. 14 may be performed when the washing tub motor 230 operates at a speed at which the laundry moves in the low portion of the washing tub 120, and the third mode of (c) of FIG. 14 may be performed when washing tub motor 230 operates at a speed at which the laundry moves from the lower portion of the washing tub 120 to the upper portion and falls from the upper portion. Accordingly, it is possible to improve washing power due to circulation pumping during washing.

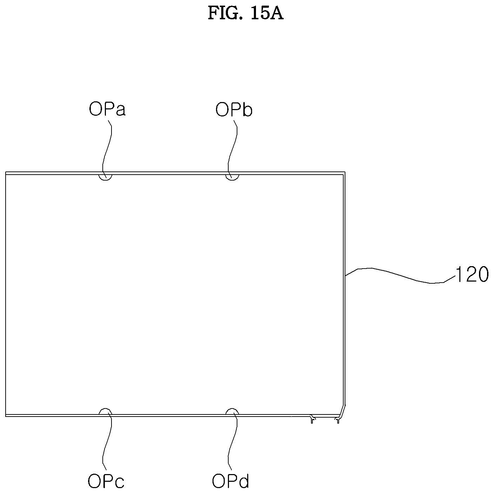

FIG. 15A illustrates that, while the washing tub motor 230 is stopped, the circulation pump motor 730 is also stopped, and the wash water is not sprayed through the spray ports OPa to OPd formed in the washing tub 120.

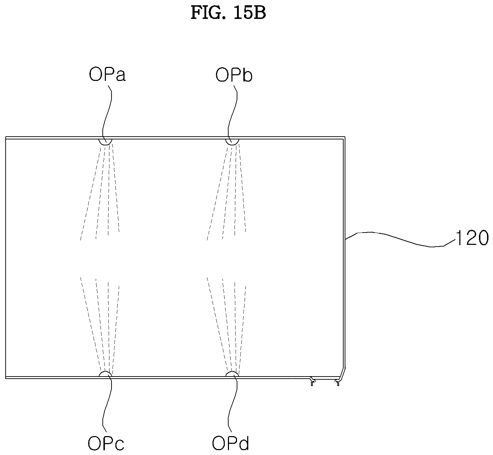

Next, FIG. 15B illustrates that wash water circulated by pumping of the circulation pump 171 is sprayed through the spray ports OPa to OPd formed in the washing tub 120 by the rotation of the washing tub motor 230 and the synchronous rotation of the circulation pump motor 730 therewith.

To this end, the main controller 210 may perform control such that, in synchronization with the operation timing of the washing tub motor 230, the wash water circulated of pumping by the circulation pump 171 is sprayed through the spray ports OPa to OPd formed in the washing tub 120.

In particular, FIG. 15B illustrates that the wash water circulated of pumping by the circulation pump 171 is strongly sprayed when operating with R1 power in (a) of FIG. 14, operating with R3 power in (b) of FIG. 14 or operating with R5 power in (c) of FIG. 14.

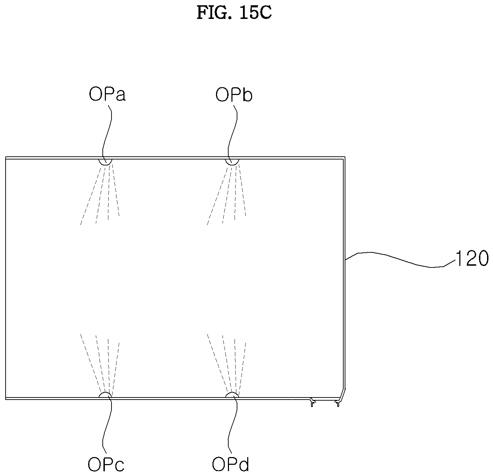

Next, FIG. 15C illustrates that wash water circulated by pumping of the circulation pump 171 is sprayed through the spray ports OPa to OPd formed in the washing tub 120 by the rotation of the washing tub motor 230 and the synchronous rotation of the circulation pump motor 730 therewith.

In particular, FIG. 15B illustrates that the wash water circulated of pumping by the circulation pump 171 is weakly sprayed when operating with R2 power in (b) of FIG. 14 or operating with R4 power in (c) of FIG. 14.

Meanwhile, FIG. 1 illustrates a frond loading type machine as a laundry treatment machine, but the circulation pump driving apparatus 720 according to an embodiment of the present disclosure may also be applied to a top loading type.

Meanwhile, the circulation pump driving apparatus 720 according to an embodiment of the present disclosure may be applied to various machines such as dishwashers and air conditioners, in addition to the laundry treatment machine 100.

The circulation pump driving apparatus and the laundry treatment machine including the same according to embodiments of the present disclosure are not limited to the configurations and methods of the above-described embodiments, and various modifications to the embodiments may be made by selectively combining all or some of the embodiments.

Meanwhile, a method for operating the circulation pump driving apparatus and the laundry treatment machine according to the present disclosure can be implemented with processor-readable codes in a processor-readable recording medium provided for each of the circulation pump driving apparatus and the laundry treatment machine. The processor-readable recording medium includes all kinds of recording devices for storing data that is readable by a processor.

## Claims

1. A circulation pump driving apparatus (720) comprising:
a circulation pump motor (730) configured to operate a circulation pump (171) for circulating wash water introduced from a washing tub (120) by pumping;
a converter (410) configured to output a direct current (DC) voltage;
an inverter (420) configured to convert the DC voltage from the converter (410) into an alternating current (AC) voltage by a switching operation and to output the converted AC voltage to the circulation pump motor (730);
a controller (210) configured to control the circulation pump motor (730) to operate in at least two modes among a first mode in which one of a speed and a power of the circulation pump motor (730) is constant, a second mode in which the one of the speed and the power of the circulation pump motor (730) repeatedly rises and falls, and a third mode in which the one of the speed and the power of the circulation pump motor (730) rises at a first rising slope (Sc1) and a second rising slope (Sc2), and then remains constant,
wherein, in the second mode, the controller (210) is configured to increase the speed of the circulation pump motor (730) at a third rising slope (Sb1), to then increase the speed of the circulation pump motor (730) at a fourth rising slope (Sb2), to then decrease the speed of the circulation pump motor (730) at a first falling slope (Sb3), to then repeatedly rise and fall twice at the fourth rising slope (Sb2) and at the first falling slope (Sb3), respectively, and to then decrease the speed of the circulation pump motor (730) at a second falling slope (Sb8), and
wherein the third rising slope (Sb1) is larger than the fourth rising slope (Sb2).

2. The circulation pump driving apparatus (720) of claim 1, wherein the controller (210) is configured to control the circulation pump motor (730) to operate in the third mode when a washing tub motor (230) operates at a speed at which laundry moves from a lower portion of the washing tub (120) to an upper portion and falls from the upper portion.

3. The circulation pump driving apparatus (720) of claim 1, wherein the controller (210) is configured to control the fourth rising slope (Sb2) of the circulation pump motor (730) and the first falling slope (Sb3) to be the same as each other in the second mode.

4. The circulation pump driving apparatus (720) of claim 1, wherein the controller (210) is configured to control the fourth rising slope (Sb2) of the circulation pump motor (730) in the second mode and the second speed rising slope (Sc2) in the third mode to be the same as each other.

5. The circulation pump driving apparatus (720) of claim 1, wherein the controller (210) is configured to control the circulation pump motor (730) to perform the first to third modes sequentially and repeatedly.

6. The circulation pump driving apparatus (720) of claim 1, wherein the controller (210) is configured to control the circulation pump motor (730) to perform the first mode when a washing tub motor (230) operates at a speed at which the laundry is attached to the washing tub (120).

7. The circulation pump driving apparatus (720) of claim 1, wherein the controller (210) is configured to control the circulation pump motor (730) to perform the second mode when a washing tub motor (230) operates at a speed at which the laundry moves in the lower portion of the washing tub (120).

8. The circulation pump driving apparatus (720) of claim 1, wherein the controller (210) is configured to control power supplied to the circulation pump motor to be constant without decreasing over time when a water level of the washing tub (120) is lowered during circulation pumping.

9. The circulation pump driving apparatus (720) of claim 1, wherein the fourth rising slope (Sb2) and the first falling slope (Sb3) differ only in polarity and have the same magnitude.

10. A laundry treatment apparatus (100) comprising:
a washing tub (120);
a washing tub motor (230) to rotate the washing tub (120);
a circulation pump driving apparatus (720) of any one of claims 1 to 9.

## Patentansprüche

1. Umwälzpumpen-Antriebsvorrichtung (720), die Folgendes umfasst:
einen Umwälzpumpenmotor (730), der konfiguriert ist, eine Umwälzpumpe (171) zu betreiben, um Waschwasser, das von einem Waschbottich (120) eingeleitet wird, durch Pumpen umzuwälzen;
einen Umsetzer (410), der konfiguriert ist, eine Gleichspannung (DC-Spannung) auszugeben;
einen Wechselrichter (420), der konfiguriert ist, die Gleichspannung vom Umsetzer (410) durch einen Umschaltbetrieb in eine Wechselspannung (AC-Spannung) umzusetzen und die umgesetzte Wechselspannung an den Umwälzpumpenmotor (730) auszugeben;
eine Steuereinheit (210), die konfiguriert ist, den Umwälzpumpenmotor (730) so zu steuern, dass er in wenigstens zwei Betriebsarten betrieben wird, die eine erste Betriebsart, in der eine Drehzahl oder eine Leistung des Umwälzpumpenmotors (730) konstant ist, eine zweite Betriebsart, in der die Drehzahl oder die Leistung des Umwälzpumpenmotors (730) wiederholt steigt und fällt, und eine dritte Betriebsart, in der die Drehzahl oder die Leistung des Umwälzpumpenmotors (730) mit einer ersten positiven Steigung (Sc1) steigt und einer zweiten positiven Steigung (Sc2) steigt und dann konstant bleibt, umfassen,
wobei in der zweiten Betriebsart die Steuereinheit (210) konfiguriert ist, die Drehzahl des Umwälzpumpenmotors (730) mit einer dritten positiven Steigung (Sb1) zu erhöhen, daraufhin die Drehzahl des Umwälzpumpenmotors (730) mit einer vierten positiven Steigung (Sb2) zu erhöhen, daraufhin die Drehzahl des Umwälzpumpenmotors (730) mit einer ersten negativen Steigung (Sb3) zu verringern, daraufhin jeweils zweimal wiederholt mit der vierten positiven Steigung (Sb2) und der ersten negativen Steigung (Sb3) steigen und fallen zu lassen und daraufhin die Drehzahl des Umwälzpumpenmotors (730) mit einer zweiten negativen Steigung (Sb8) zu verringern, und
wobei die dritte positive Steigung (Sb1) größer als die vierte positive Steigung (Sb2) ist.

2. Umwälzpumpen-Antriebsvorrichtung (720) nach Anspruch 1, wobei die Steuereinheit (210) konfiguriert ist, den Umwälzpumpenmotor (730) so zu steuern, dass er in der dritten Betriebsart arbeitet, wenn ein Waschbottichmotor (230) mit einer Drehzahl arbeitet, bei der sich Wäsche von einem unteren Abschnitt des Waschbottichs (120) zu einem oberen Abschnitt bewegt und vom oberen Abschnitt herabfällt.

3. Umwälzpumpen-Antriebsvorrichtung (720) nach Anspruch 1, wobei die Steuereinheit (210) konfiguriert ist, die vierte positive Steigung (Sb2) des Umwälzpumpenmotors (730) und die erste negative Steigung (Sb3) so zu steuern, dass sie in der zweiten Betriebsart einander gleich sind.

4. Umwälzpumpen-Antriebsvorrichtung (720) nach Anspruch 1, wobei die Steuereinheit (210) konfiguriert ist, die vierte positive Steigung (Sb2) des Umwälzpumpenmotors (730) in der zweiten Betriebsart und die zweite positive Steigung (Sb2) der Drehzahl in der dritten Betriebsart so zu steuern, dass sie einander gleich sind.

5. Umwälzpumpen-Antriebsvorrichtung (720) nach Anspruch 1, wobei die Steuereinheit (210) konfiguriert ist, den Umwälzpumpenmotor (730) so zu steuern, dass er die erste bis dritte Betriebsart der Reihe nach und wiederholt ausführt.

6. Umwälzpumpen-Antriebsvorrichtung (720) nach Anspruch 1, wobei die Steuereinheit (210) konfiguriert ist, den Umwälzpumpenmotor (730) so zu steuern, dass er die erste Betriebsart ausführt, wenn ein Waschbottichmotor (230) mit einer Drehzahl betrieben wird, bei der die Wäsche am Waschbottich (120) haftet.

7. Umwälzpumpen-Antriebsvorrichtung (720) nach Anspruch 1, wobei die Steuereinheit (210) konfiguriert ist, den Umwälzpumpenmotor (730) so zu steuern, dass er die zweite Betriebsart ausführt, wenn ein Waschbottichmotor (230) mit einer Drehzahl betrieben wird, bei der sich die Wäsche im unteren Abschnitt des Waschbottichs (120) bewegt.

8. Umwälzpumpen-Antriebsvorrichtung (720) nach Anspruch 1, wobei die Steuereinheit (210) konfiguriert ist, die Leistung, die dem Umwälzpumpenmotor zugeführt wird, so zu steuern, dass sie konstant ist, ohne mit der Zeit geringer zu werden, wenn ein Wasserstand des Waschbottichs (120) während eines Umwälzpumpens abfällt.

9. Umwälzpumpen-Antriebsvorrichtung (720) nach Anspruch 1, wobei sich die vierte positive Steigung (Sb2) und die erste negative Steigung (Sb3) nur im Vorzeichen unterscheiden und den gleichen Betrag haben.

10. Wäschebehandlungsvorrichtung (100), die Folgendes umfasst:
einen Waschbottich (120);
einen Waschbottichmotor (230) zum Drehen des Waschbottichs (120);
eine Umwälzpumpen-Antriebsvorrichtung (720) nach einem der Ansprüche 1 bis 9.

## Revendications

1. Appareil d'entraînement de pompe de circulation (720) comportant :
un moteur de pompe de circulation (730) configuré pour faire fonctionner une pompe de circulation (171) pour faire circuler de l'eau de lavage introduite à partir d'une cuve de lavage (120) par pompage ;
un convertisseur (410) configuré pour délivrer en sortie une tension continue (DC) ;
un onduleur (420) configuré pour convertir la tension DC provenant du convertisseur (410) en une tension alternative (AC) par une opération de commutation et pour délivrer la tension AC convertie au moteur de pompe de circulation (730) ;
une commande (210) configurée pour commander au moteur de pompe de circulation (730) de fonctionner dans au moins deux modes parmi un premier mode dans lequel un premier paramètre parmi une vitesse et une puissance du moteur de pompe de circulation (730) est constant, un deuxième mode dans lequel le paramètre parmi la vitesse et la puissance du moteur de pompe de circulation (730) augmente et diminue de manière répétée, et un troisième mode dans lequel le paramètre parmi la vitesse et la puissance du moteur de pompe de circulation (730) augmente sur une première pente ascendante (Sc1) et une deuxième pente ascendante (Sc2), et reste ensuite constant,
dans lequel, dans le deuxième mode, la commande (210) est configurée pour augmenter la vitesse du moteur de pompe de circulation (730) sur une troisième pente ascendante (Sb1), pour ensuite augmenter la vitesse du moteur de pompe de circulation (730) sur une quatrième pente ascendante (Sb2), pour ensuite diminuer la vitesse du moteur de pompe de circulation (730) sur une première pente descendante (Sb3), pour ensuite augmenter et diminuer deux fois sur la quatrième pente ascendante (Sb2) et sur la première pente descendante (Sb3) de manière répétée, respectivement, et pour ensuite réduire la vitesse du moteur de pompe de circulation (730) sur une seconde pente descendante (Sb8), et
dans lequel la troisième pente ascendante (Sb1) est plus raide que la quatrième pente ascendante (Sb2).

2. Appareil d'entraînement de pompe de circulation (720) selon la revendication 1, dans lequel la commande (210) est configurée pour commander au moteur de pompe de circulation (730) de fonctionner dans le troisième mode lorsqu'un moteur de cuve de lavage (230) fonctionne à une vitesse à laquelle du linge passe d'une partie inférieure de la cuve de lavage (120) à une partie supérieure et retombe à partir de la partie supérieure.

3. Appareil d'entraînement de pompe de circulation (720) selon la revendication 1, dans lequel la commande (210) est configurée pour commander la quatrième pente ascendante (Sb2) du moteur de pompe de circulation (730) et la première pente descendante (Sb3) pour qu'elles soient identiques l'une à l'autre dans le deuxième mode.

4. Appareil d'entraînement de pompe de circulation (720) selon la revendication 1, dans lequel la commande (210) est configurée pour commander la quatrième pente ascendante (Sb2) du moteur de pompe de circulation (730) dans le deuxième mode et la deuxième pente ascendante de vitesse (Sc2) dans le troisième mode pour qu'elles soient identiques l'une à l'autre.

5. Appareil d'entraînement de pompe de circulation (720) selon la revendication 1, dans lequel la commande (210) est configurée pour commander au moteur de pompe de circulation (730) d'exécuter les premier à troisième modes de manière séquentielle et répétée.

6. Appareil d'entraînement de pompe de circulation (720) selon la revendication 1, dans lequel la commande (210) est configurée pour commander au moteur de pompe de circulation (730) d'exécuter le premier mode lorsqu'un moteur de cuve de lavage (230) fonctionne à une vitesse à laquelle le linge adhère à la cuve de lavage (120).

7. Appareil d'entraînement de pompe de circulation (720) selon la revendication 1, dans lequel la commande (210) est configurée pour commander au moteur de pompe de circulation (730) d'exécuter le deuxième mode lorsqu'un moteur de cuve de lavage (230) fonctionne à une vitesse à laquelle le linge passe dans la partie inférieure de la cuve de lavage (120).

8. Appareil d'entraînement de pompe de circulation (720) selon la revendication 1, dans lequel la commande (210) est configurée pour commander une puissance fournie au moteur de pompe de circulation pour qu'elle soit constante sans diminuer en fonction du temps lorsqu'un niveau d'eau de la cuve de lavage (120) est abaissé pendant le pompage de circulation.

9. Appareil d'entraînement de pompe de circulation (720) selon la revendication 1, dans lequel la quatrième pente ascendante (Sb2) et la première pente descendante (Sb3) diffèrent uniquement en polarité et ont la même amplitude.

10. Appareil de traitement du linge (100) comportant :
une cuve de lavage (120) ;
un moteur de cuve de lavage (230) pour faire tourner la cuve de lavage (120) ;
un appareil d'entraînement de pompe de circulation (720) selon l'une quelconque des revendications 1 à 9.
